# EUROPEAN PATENT SPECIFICATION

(11) **EP 2 563 157 B1**
(45) Date of publication and mention of the grant of the patent: **21.03.2018**
(21) Application number: 11774524.0
(22) Date of filing: 28.04.2011
(51) Int. Cl.: A23K 50/10, A23K 10/30, A23K 30/10, A23K 30/15

(54) **NOVEL RUMINANT FEED**
NEUES FUTTER FÜR WIEDERKÄUER
NOUVEL ALIMENT POUR RUMINANTS

(30) Priority: 29.04.2010 US 329122 P
(43) Date of publication of application: 06.03.2013
(73) Proprietor: The Agricultural Research Organization, 50250 Bet Dagan (IL)
(72) Inventor: MIRON, Joshuah, 54422 Givat Shmuel (IL); KUSHNIR, Uri, 53220 Givataim (IL)
(74) Representative: Harrison IP Limited
(86) International application number: PCT/IB2011/051873
(87) International publication number: WO 2011/135536

(56) References cited:
- WO-A1-2009/034091
- GB-A- 190 507 427
- US-A1- 2004 076 659
- US-A1- 2009 285 931
- MIRON J ET AL: "Cephalaria - A new forage plant", MESHEK HABAKAR VEHACHALAV,, vol. 346, 1 January 2010 (2010-01-01), pages 70-72, XP009174740,
- MIRON J ET AL: "Effects of feeding cows in early lactation with soy hulls as partial forage replacement on heat production, retained energy and performance", ANIMAL FEED SCIENCE AND TECHNOLOGY, ELSEVIER, AMSTERDAM, NL, vol. 155, no. 1, 20 January 2010 (2010-01-20), pages 9-17, XP026819339, ISSN: 0377-8401 [retrieved on 2009-11-06]
- WEINBERG Z G ET AL: "Preservation of total mixed rations for dairy cows in bales wrapped with polyethylene stretch film A commercial scale experiment", ANIMAL FEED SCIENCE AND TECHNOLOGY, ELSEVIER, AMSTERDAM, NL, vol. 164, no. 1, 24 November 2010 (2010-11-24), pages 125-129, XP028361943, ISSN: 0377-8401, DOI: 10.1016/J.ANIFEEDSCI.2010.11.016 [retrieved on 2010-12-01]
- SHITZER ET AL.: 'The role of geologic grazing refuges in structuring Mediterranean grassland plant communities.' PLANT ECOLOGY vol. 198, no. 1, 2008, pages 135 - 147, XP019616448
- DIAZ ET AL.: 'Can grazing response of herbaceous plants be predicted from simple vegetative traits?' JOURNAL OF APPLIED ECOLOGY vol. 38, 2001, pages 497 - 508, XP055069116
- WEINBERG Z.G. ET AL.: 'Preservation of total mixed rations for dairy cows in bales wrapped with polyethylene stretch film - A commercial scale experiment' ANIMAL FEED SCIENCE AND TECHNOLOGY vol. 164, 2011, pages 125 - 129, XP028361943

## Description

### FIELD OF THE INVENTION

The present invention relates to a novel type of food source for ruminants. More particularly it relates to a feed for ruminants comprising *Cephalaria joppensis* (CJ) having been raised as a crop characterised in that the CJ is in the form of silage., providing an alternative dicotyledonaceous (broad leaf) crop to crop rotation system of the agriculture.

### BACKGROUND OF THE INVENTION

Ruminants have a complex digestion mechanism which characterise their specific needs as regards to the uptake and exploitation of food. Since many species and varieties of ruminants are domesticated, their specific traits as such and especially feeding reflect on the economy of farming and even on world economy.

Feeding productive ruminants is the largest cost associated with milk and meat production, typically accounting for 60-70% of the total production costs. The food quality has a large influence on the milk and meat production. Ruminants require energy, protein, vitamins, minerals, fiber, and water. Energy (calories) is usually the most limiting nutrient, whereas protein is the most expensive. Deficiencies, excesses, and imbalances of vitamins and minerals can limit animal performance and lead to various health problems. Fiber is necessary to maintain a healthy rumen environment and prevent digestive upsets and is served as an important energy source for the animal. Hay is one of the primary sources of roughages for ruminants and it is used during the winter or non-grazing season in cold places. Hay varies in quality and the only way to know its nutritional content is to have the hay analyzed by a forage testing laboratory. Hay tends to be a moderate source of protein and energy for sheep and goats. Legume hays -alfalfa, clover, or vetch tend to be higher in protein, vitamins and minerals, than grass hays (like oat or wheat). The energy as well as protein content of hay depends upon the phenological stage of the forage crop at the time of harvesting. Proper curing and storage is also necessary to maintain nutritional quality of hay.

Silage made from wet forage or grain crops is widely used to feed productive ruminants because high-producing animals can often consume willingly high levels of moisture silage to meet their nutritional needs. Silages are also easily mixed with other ration ingredients to produce palatable

Total Mixed Ration (hereinafter TMR) for productive ruminants. Ensiling is a fermentation process involving microorganisms and need to be attended properly. Several systems and methods for producing silage are known in the art, for example, see US patent application US 2010/0278968 A1.

In the science of animal husbandry there are many techniques used to evaluate the response of the animals to food, food components and quantities thereof, as regards health parameters, meat and milk production, and fecundity. In "Effects of feeding cows in early lactation with soy hulls as partial forage replacement on heat production, retained energy and performance", by J. Miron et al. in Animal Feed Science and Technology 155 (2010) 9-17, 15 several such aspects of as digestibility, milk yield and composition. In "Preservation of total mixed rations for dairy cows in bales wrapped with polyethylene stretch film - A commercial scale experiment", by Z.G. Weinberg et al., Animal Feed Science and Technology 164 (2011) 125-129), details of ensiling of feed for ruminants is discussed, with a special attention to plastic bails.

### DETAILED DESCRIPTION OF THE INVENTION

According to the present invention, there is provided a feed for ruminants comprising *Cephalaria joppensis* (CJ) having been raised as a crop characterised in that the CJ is in the form of silage.

Generally, the ensiled CJ is a component of a total mixed ration (TMR), wherein the ensiled CJ may constitute the sole source of roughage of said TMR.

The wild annual broad leaf (Dicotyledonaceaous) species *Cephalaria joppensis* (see US Department of Agriculture, GRIN taxonomy of plants), hereinafter CJ, grows in many of the Mediterranean districts of Israel and other Eastern and central Mediterranean countries. It is modest in its requirements for water, rain fed under Mediterranean climate condition, and also in adjacent semiarid districts. Although the Mediterranean climate is typified by an arid summer, CJ flourishes into the summer and also flowers at the warm, dry season, completing the growth cycle well into the end of the dry season.

### Phenological aspects of the herbacious CJ and their practical implications

To accommodate the CJ to provide inputs for satisfying animal husbandry needs, several varieties were selected from wild populations, specifically in order to provide a prolonged harvesting period. The phenological aspects of the wild type are such that while dry matter accumulation in spring progresses, a by- product of the aging starts to accumulate, namely lignification process progresses, concomitantly eventually increasing the percentage of lignified tissue in the crop.

Optimizing of harvesting time requires to find the time in which dry mass versus lignification is at practical peak. Another limit to harvesting is the fruiting. The fact is that the fruit of CJ are bitter and deter animals from feeding upon the herb, therefore harvest must be accomplished before fruiting. To accommodate the crop to commercial use, varieties are being developed with various degrees of earliness to mature and flower, for providing a prolonged harvesting period.

In accordance with the present invention, several feed preparations for ruminants are made possible using the harvested canopy of the CJ, and ensiling the CJ typically by applying customary preparation methods, for obtaining a valuable addition to the list of existing dietary inputs for ruminants.

Domesticated CJ constitutes an alternative dicotyledonaceous (broad leaf) crop in crop rotation of the agricultural field crop system.

### Feed preparations using CJ

### 1. Hay (comparative dried preparations)

The crop is harvested, left in the field to dry in the sun, usually for at least one week. When dry, it is collected in bales, and can be carried away to be used as fodder. Baled hay can be stored either in the field or in barns for several months. Typically, hay contains at least 85% dry matter. CJ has proved to be a workable field crop in this respect, like any conventional source of hay, and edible by ruminants (see feeding experiment number 4).
2. Silage. The green crop is harvested, chopped, and while still wet it is compressed to exclude as much air as possible. Subsequently it is put in plastic bags, or covered in bunkers or silos, at anaerobic conditions during which time sugars are broken down to acids (notably lactic acid) the pH drops and the organic substance is preserved for various time periods. Once a package of silage is opened and exposed to air, deterioration ensues, and the remaining shelf life is then typically 1 week.
3. One option in this aspect is to ferment the fresh cut and chopped CJ in plastic bales either as a single component as is or as a component mixed with water, molasses, whey, or silage material as known in the art (such as wheat and or maize and or sorghum). Such CJ silages can be kept packed for as long as 6 months. When unpacked, such silages can be mixed with additional feed components to form total mixed rations (TMRs) forming a complete dietary system, or fed as is to productive ruminants.
3.1. Alternatively, freshly harvested CJ, or CJ based silages at 22-50% dry material (hereinafter DM) content, are packed in polyethylene bales *a priori* mixed with other components to form a TMR for productive ruminants, before it is packed anaerobically and ensiled in plastic bags. Such ensiled TMR has been shown to provide fodder with a nutritive value similar to TMR which includes wheat silage as known in the art. Such TMR includes CJ at a level of 10-100% of dietary roughage. As an example, in Israel TMR of lactating cows contains 30-40 roughage feeds to contribute 17-19% roughage NDF (neutral detergent fiber, see below). If the ensilage is composed of less than a 100% roughage, it can be made as a product in which CJ is mixed with other silage types, and or additives such as molasses, wet soybean hull residues and whey and then mixed with regular TMR components (e.g., minerals, vitamins and protein sources). Such CJ based TMRs are further characterized by high nutritive value, long shelf-life outdoor of at least 6 months and relatively high stability under aerobic exposure. NDF is the fiber source essential for health and appropriate digestion of productive ruminants.

### Crop raising and early diagnostics regarding some characteristics of the raised crop

We found out that good growth conditions for CJ as a commercial forage crop include as follows: sowing rate - (15,000-20,000 g seeds per Ha); sowing season (Nov.-Jan.), (under Mediterranean climatic regime, the rainy season); pre-emergence treatments against weeds: (we used Linurex (2000 cm/ha), Stomp (5500cm/ha), Alanex (4000cm/ha); post emergence treatment against weeds: Kerb-50 (2000 g/ha). The names and rates of the herbicides as given are exemplary and do not constitute an endorsement of their use. Harvest time: at the beginning of flowering stage (April-July) for ensilage or direct ensilage.

**Table 1. A report of some parameters of the CJ crop derived from early crop raising trials conducted as follows:**

| | | | | |
|---|---|---|---|---|
| 1. Crop raising trial 1: Site and year : Beit Dagan , Israel, 2008 | | | | |
| 2. Crop raising trial 2: Site and year : Beit Dagan , Israel, 2009 | | | | |
| 3. Crop raising trial 3: Site and year : Massuot Itzhak , Israel, 2009 | | | | |

| Parameter | trial 1 | trial 2 | trial 3 | SEM |
|---|---|---|---|---|
| Total annual rain, mm | 414 | 404 | 303 | |
| Crop yield, Tons DM/Ha | 23.5^{a} | 24.7^{a} | 16.4^{b} | 0.09 |
| Plant leaf mass % | 18.5^{b} | 24.5^{a} | 22.7^{ab} | 1.6 |
| DM content, % | 39.0^{a} | 33.5^{b} | 39.8^{a} | 1.41 |
| Plant height, cm | 263 | 255 | 243 | 6.45 |
| NDF content, % | 54.9^{b} | 59.9^{a} | 54.6^{b} | 1.15 |
| In vitro DM digestibility , % | 58.0 | 57.4 | 57.3 | 0.9 |

| | | | | |
|---|---|---|---|---|
| SEM = standard error of the means | | | | |

### Experiments in which CJ was used solely or in combination as a feed preparation

The following experiments were made in order to determine the value of CJ based ensiled ruminant feed, and compare it with other sources of roughage as known in the art, notably wheat and sorghum silages.

The results of feed preparation experiment 1 are reported in table 2.

**Table 2. A report of some parameters of preparations of silages derived from crop of CJ raised in the year 2009**

| Parameter | CJ fermented in combination, in polyethylene bales | | | | | SEM |
|---|---|---|---|---|---|---|
| | I | II | III | IV | V | |
| pH of the silage | 4.37 | 4.05 | 4.20 | 4.07 | 3.97 | 0.20 |
| Silage DM (%) | 47.3^{a} | 38.2^{bc} | 35.5^{c} | 39.9^{bc} | 44.2^{c} | 1.80 |
| % Loss of DM during ensilage | 9.80^{a} | 7.75^{ab} | 0^{c} | 3.25^{bc} | 2.0.0^{c} | 1.76 |
| NDF content % | 62.2 ^{a} | 57.7 ^{b} | 57.3 ^{b} | 60.3^{ba} | 58.0 ^{a} | 0.97 |
| Protein content % | 6.88^{b} | 9.27^{a} | 9.06^{a} | 7.20^{b} | 7.91^{b} | 0.30 |
| IVDMD % | 56.1^{c} | 58.6^{b} | 57.4^{cb} | 59.2^{b} | 61.2^{a} | 0.65 |
| CO₂ produced in 7 days of exposure to air g/Kg | 8.70^{b} | 1.50^{c} | 25.5^{a} | 1.70^{c} | 3.00^{c} | 0.72 |
| pH after 7 days of air exposure | 4.91^{b} | 3.96^{b} | 5.15^{a} | 4.06^{b} | 3.91^{b} | 0.25 |

| | | | | | | |
|---|---|---|---|---|---|---|
| ^{abcd} values at the same line marked with different letters indicate significant difference NDF stands for neutral detergent fiber DM stands for dry matter IVDMD stands for in vitro dry matter digestibility Explanation of columns in the table: 10 I - Fresh CJ alone II - Silage of CJ + water + molasses, at the ratio of 3:1:1 III - silage of CJ+ whey, at the ratio of 4:1 IV - Silage of CJ mixed with sorghum silage at the ratio of 1:1 V - Silage of CJ mixed with maize silage at the ratio of 1:1 15 | | | | | | |

The results of feed preparation experiment 2 are reported in table 3.

**Table 3. A report of some parameters of TMR containing a component of CJ raised as crop in 2009 as compared with control TMRs.**

| Parameter | TMRs **fermented** in polyethylene bales | | | | | |
|---|---|---|---|---|---|---|
| | I | II | III | IV | V | SEM |
| pH of the ensiled packed TMR | 4.37 | 4.33 | 4.36 | 4.17 | 4.12 | 0.07 |
| DM content of the ensiled TMR (%) | 53.3 | 58.3 | 56.9 | 56.0 | 55.2 | 0.70 |
| Loss of DM during ensilage (%) | 11.5^{a} | 0.35^{c} | 0.80^{c} | 1.50^{c} | 5.00^{b} | 0.60 |
| NDF in the ensiled TMR (%) | 38.1 | 39.5 | 41.9 | 38.8 | 39.9 | 0.87 |
| IVDMD digestibility % | 72.2 | 71.5 | 72.2 | 72.6 | 73.1 | 0.67 |
| CO₂ after 7 days of exposure to air g/Kg | 0.90 | 1.60 | 2.10 | 0.20 | 1.00 | 0.80 |
| pH after 7 days of exposure to air | 4.35 | 4.32 | 4.34 | 4.14 | 4.14 | 0.11 |

| | | | | | | |
|---|---|---|---|---|---|---|
| Control - Commercial TMR of the prior art based on wheat and corn silages at the ratio of 1:1 as the source of roughage in the TMR II - Fresh cut CJ as a sole roughage in the ensiled TMR III -Fresh cut CJ mixed with wheat silage at the ratio of 1:1 as the source of roughage in the ensiled TMR IV - Fresh cut CJ mixed with sorghum silage at the ratio of 1:2 as the source of roughage in the TMR V - Control - wheat silage mixed with sorghum silage at the ratio of 1:2 as the source of roughage in the TMR | | | | | | |

### Animal feeding experiments

### Feeding experiment 1:

**Table 4. A report of dry matter digestibility by sheep of silages providing TMR containing a component of CJ raised as crop in 2009, as described above, reference is made to Table 3.**

| Parameter | TMRs **fermented** in polyethylene bales | | | | | |
|---|---|---|---|---|---|---|
| | I | II | III | IV | V | SEM |
| DM digestibility % by sheep | 71.4 | 67.6 | 70.2 | 67.4 | 71.3 | 0.95 |

| | | | | | | |
|---|---|---|---|---|---|---|
| I - Control - Commercial TMR of the prior art based on wheat and corn silages at the ratio of 1:1 as the source of roughage in the TMR II - Fresh cut CJ as a sole roughage in the ensiled TMR III -Fresh cut CJ mixed with wheat silage at the ratio of 1:1 as the source of roughage in the ensiled TMR IV - Fresh cut CJ mixed with sorghum silage at the ratio of 1:2 as the source of roughage in the TMR V - Control - wheat silage mixed with sorghum silage at the ratio of 1:2 as the source of roughage in the TMR | | | | | | |

**Table 5. A report of some feed consumption and milk production parameters of cows fed with two different TMRs, one containing CJ silage (TMR IV in Table 4) and the other, a control TMR containing wheat silage (TMR V in Table 4).**

| Parameter | CJ as sole roughage in the TMR | Control, wheat as sole roughage in the TMR | SEM |
|---|---|---|---|
| DM consumption (Kg/cow/day) | 21.6 | 22.0 | 0.31 |
| DM digestibility by cows % | 67.9 | 69.0 | 0.39 |
| Milk production (Kg/cow/day) | 35.5^{b} | 36.5^{a} | 0.18 |
| Milk Fat % | 3.21 | 3.21 | 0.05 |
| Milk Protein % | 2.74 | 2.78 | 0.03 |
| Milk Lactose % | 4.78 | 4.79 | 0.01 |
| Economically corrected milk yield (Kg/cow/day) | 30.4^{b} | 31.6^{a} | 0.19 |

| | | | |
|---|---|---|---|
| ^{ab} values at the same line marked with different letters indicate significant difference at P<0.05 20 | | | |

### Feeding experiment 3

In feeding experiment carried out during 2010, CJ was raised as a crop grown on an area of 10 Ha in Yoqneam, Israel, with no supplementary irrigation. A potential yield of 16 tons DM per Ha was obtained. In some locations in the plot lodging of the stems occurred, in which case a potential yield of 12 tons DM per Ha was obtained.

**Table 6. A report of some feed consumption and milk production parameters of cows fed with two different ensiled TMRs, one containing fresh CJ as the sole roughage and the other, a control ensiled TMR containing wheat silage.**

| Parameter | CJ as sole roughage in the TMR | Control, wheat as sole roughage in the TMR | SEM |
|---|---|---|---|
| DM consumption (Kg/cow/day) | 21.2 | 21.5 | 0.28 |
| Milk production (Kg/cow/day) | 35.8 | 35.1 | 0.32 |
| Milk fat % | 3.51 | 3.50 | 0.02 |
| Milk protein % | 2.74^{a} | 2.58^{b} | 0.01 |
| Economically corrected milk yield (Kg/cow/day) | 31.9^{a} | 30.3^{b} | 0.03 |
| Resting time, minutes | 498 | 467 | 12.2 |
| DM digestibility (%) | 58.9 | 60.1 | 0.62 |
| NDF digestibility (%) | 38.3 | 36.9 | 0.56 |

| | | | |
|---|---|---|---|
| ^{ab} values at the same line marked with different letters indicate significant difference P<0.05 | | | |

The results show some advantage to the CJ with respect to yield of economically corrected milk.

### Comparative Feeding experiment 4

In this experiment, conducted in the year 2010, CJ raised in a commercial field was harvested at the stage of early flowering, and the cut crop was wilted for a week in the field. Subsequently, the wilted hay was collected and packed by a compress- chopper, in bales weighing about half a ton each.

A control group of animals housed in a cowshed included a 100 cows was fed using a prior art TMR containing 15% of the dry matter derived from vetch and wheat hay for a period of 30 days.

The experimental group, containing also 100 cows with similar initial performance, was fed a similar TMR containing 15% of the dry matter CJ hay, i.e. replacing the entirety of the hay of the prior art. The results show that the experimental group delivered 38.9 Kg milk per cow per day and the control group delivered 39.0 Kg milk per cow per day, not a significant difference. Also the total milk solids of each group were not significantly different.

**Further breeding program** includes the development of CJ varieties with increased yield and resistance to lodging.

**To summarise the characteristics of CJ, as demonstrated in the** experiments above, in view of the CJ species being a potential feed crop for ruminants, and successful replacer of wheat silage; the following stand out:
1. Based on the data in Table 1, CJ has a higher DM production per Hectare than wheat, as known in Israel. New varieties of CJ developed, outperform the current varieties in this respect.
2. The nutritive value of CJ as roughage for dairy cows equals that of wheat silage (referring to Tables 3- 5 and experiment 4 above).
3. The practice according to which fresh cut CJ is mixed with other components and bailed in plastic wrap (see "Preservation of total mixed rations for dairy cows in bales wrapped with polyethylene stretch film - A commercial scale experiment", by Z.G.

Weinberg et al., Animal Feed Science and Technology 164 (2011) 125-129), offers a specific advantage in that the entire ensilage, whether TMR or not, is easily transportable and made ready to use conveniently.

## Claims

1. A feed for ruminants comprising *Cephalaria joppensis* (CJ) having been raised as a crop **characterised in that** the CJ is in the form of silage.

2. A feed according to claim 1, wherein the ensiled CJ is a component of a total mixed ration (TMR).

3. A feed according to claim 2, wherein the ensiled CJ constitutes the sole source of roughage of said TMR.

4. A feed according to any one of claims 1 to 3, wherein the ruminants are selected from the group consisting of dairy cows and sheep.

## Patentansprüche

1. Futter für Wiederkäuer, umfassend *Cephalaria joppensis* (CJ), das als eine Nutzpflanze gezüchtet wurde, **dadurch gekennzeichnet, dass** das CJ in der Form von Silage ist.

2. Futter nach Anspruch 1, wobei das silierte CJ ein Bestandteil einer totalen Mischration (TMR) ist.

3. Futter nach Anspruch 2, wobei das silierte CJ die einzige Quelle von Ballaststoffen der TMR darstellt.

4. Futter nach einem der Ansprüche 1 bis 3, wobei die Wiederkäuer ausgewählt sind aus der Gruppe bestehend aus Milchkühen und Schaf.

## Revendications

1. Aliment pour ruminants comprenant de la *Cephalaria joppensis* (CJ) ayant été produite en tant que culture **caractérisé en ce que** la CJ est sous la forme d'ensilage.

2. Aliment selon la revendication 1, ladite CJ ensilée étant un constituant d'une ration totale mélangée (TMR).

3. Aliment selon la revendication 2, ladite CJ ensilée constituant la source unique de fourrage de ladite TMR.

4. Aliment selon l'une quelconque des revendications 1 à 3, lesdits ruminants étant choisis dans le groupe constitué par des moutons et des vaches laitières.
